# EUROPÄISCHE PATENTSCHRIFT

(11) **EP 2 486 460 B1**
(45) Veröffentlichungstag und Bekanntmachung des Hinweises auf die Patenterteilung: **09.11.2016**
(21) Anmeldenummer: 10760312.8
(22) Anmeldetag: 24.09.2010
(51) Int. Cl.: G05B 19/042, B29C 45/76

(54) **VERFAHREN ZUR STEUERUNG UND BEDIENUNG EINER PRODUKTIONSZELLE SOWIE EINE STEUEREINRICHTUNG**
METHOD FOR CONTROLLING AND OPERATING A PRODUCTION CELL, AND A CONTROL DEVICE
PROCÉDÉ POUR COMMANDER ET FAIRE FONCTIONNER UNE CELLULE DE PRODUCTION ET UN DISPOSITIF DE COMMANDE

(30) Priorität: 08.10.2009 DE 102009048746
(43) Veröffentlichungstag der Anmeldung: 15.08.2012
(73) Patentinhaber: Netstal-Maschinen AG, 8752 Näfels (CH)
(72) Erfinder: MÜLLER, Daniel, CH-8722 Kaltbrunn (CH); DENZLER, Björn, CH-8640 Rapperswil-Jona (CH); HAUSMANN, Manfred, CH-8753 Mollis (CH)
(74) Vertreter: Wilhelm, Ludwig
(86) Internationale Anmeldenummer: PCT/EP2010/064138
(87) Internationale Veröffentlichungsnummer: WO 2011/042318

(56) Entgegenhaltungen:
- EP-A1- 0 573 912
- WO-A1-2006/089451

## Beschreibung

Die vorliegende Erfindung betrifft ein Verfahren zur Steuerung und Bedienung einer Produktionszelle sowie eine Steuereinrichtung gemäß den Oberbegriffen der Ansprüche 1 bzw. 10.

Ein Verfahren zur Steuerung und Bedienung einer Produktionszelle sowie eine Steuerungsvorrichtung einer gattungsgemäßen Art ist aus der WO 2006/089451 bekannt. Dabei wird der Produktionsablauf für eine Produktionszelle durch einen Benutzer vorgegeben und parametriert. Verwendet wird eine komponentenorientierte Steuerung, wobei solche Komponenten Maschinensteuerungskomponenten, wie der Formschluss, ein Aggregat, ein Kernzug, Handlingsgeräte etc. sein können. Diese Maschinensteuerungskomponenten werden in der Steuerung virtuell abgebildet und mit einer Domänensprache kann über ein Domänenmodell der Produktionsablauf festgelegt werden.

In der WO 2006/089451 ist dies genauer beschrieben, insbesondere Maschinenabläufe auf der Basis von verhaltensvollständigen Komponenten, die zusammen ein Domänenmodell bilden, mithilfe einer Fach-Domänensprache zu erstellen, zu verwalten und auszuführen. Dabei gestattet diese Lösung, dass die Komponenten auf der Bildschirm- bzw. Bedienoberfläche erscheinen, um vom Benutzer als Basis für die Modulierung beliebiger Abläufe verwendet zu werden. Für jeden Problemraum in der Steuerung wird die Domänensprache eingesetzt, um Lösungen zu beschreiben und daraus den Programmcode automatisch zu generieren.

Mit dem vorgenannten Lösungsansatz ist jedoch dem immer stärker werdenden Anliegen zu einer größeren Variabilität beim Einsatz einer Spritzgießmaschine bzw. einer Produktionszelle nicht vollständig Rechnung getragen.

Beim Spritzgießen wird das Design eines Spritzgussteiles durch das Spritzgusswerkzeug vorgegeben. Jedoch soll oftmals nicht immer dasselbe Spritzgussteil produziert werden, sondern unterschiedliche Teile. Dies ist zwar mit einer Spritzgießmaschine allgemein möglich, doch müssen dazu das Werkzeug und eventuell weitere Peripheriegeräte ausgetauscht oder abgeändert werden. Insofern ist die Spritzgießmaschine in der Regel keine Einzweckmaschine und die Produktionszelle durch ein Austauschen von Anlagenteilen, Werkzeugen und Peripheriegeräten entsprechend umgestaltbar.

Eine Spritzgießmaschine ist dabei vorteilhafterweise so konstruiert, dass das Werkzeug und die Plastifizierung gewechselt und unterschiedliche Peripheriegeräte angeschlossen werden können. Dabei beinhaltet ein Werkzeug oftmals mehrere Aktoren und Sensoren, welche durch die Spritzgießmaschine betrieben werden müssen. Dabei können die Aktoren bestimmte Teile linear, rotatorisch oder in anderer Weise antreiben, wobei man jeweils von Antriebsachsen spricht. Das Werkzeug oder die Peripheriegeräte besitzen Anschlüsse für deren Aktoren und Sensoren, die in geeigneter Weise beaufschlagt werden müssen. Mit anderen Worten müssen das Ansteuern dieser Werkzeugachsen sowie der Achsen der Spritzgießmaschine selbst, aber auch die Peripheriegeräte für einen Maschinenablauf (z.B. Produktionsablauf, Ausspritzablauf, Schließkrafteinstellung usw.) in der richtigen Weise koordiniert werden. Die Anschlüsse der Aktoren und Sensoren der Werkzeuge und Peripheriegeräte werden dabei mit geeigneten Anschlüssen der Spritzgießmaschine verbunden, welche über die Steuerungseinrichtung kontrolliert und gesteuert werden. Sensoren können dabei auch externe Überwachungsgeräte, wie ein Kamera- oder Wägesystem sein. Eingänge können auch zur Synchronisation mit Peripheriegeräten verwendet werden. Der Produktionsablauf mit einem montierten Werkzeug und vorhandenen Peripheriegeräten aber auch weitere Maschinenabläufe können von dem Einrichter der Spritzgießmaschine vorgegeben oder angepasst werden.

Um das Werkzeug oder die Peripheriegeräte betreiben zu können, werden diese herkömmlicherweise über Anschlüsse an der Spritzgießmaschine angeschlossen. Diese Anschlüsse werden nachfolgend als Hardware-Ein- und -Ausgänge der bei einer Spritzgießmaschine oder Produktionszelle vorhandenen Anschlüsse bezeichnet. Sie stellen die Ein- und Ausgänge für die Aktoren und Sensoren dar.

Logisch gesehen werden dabei die Schnittstellen der Werkzeugachsen und Peripheriegeräte mit den an der Spritzgießmaschine vorgesehenen Anschlüssen in geeigneter Weise verbunden.

Bislang werden bei der Bestellung der Spritzgießmaschine die gewünschten Anschlüsse angegeben und entsprechend vorgesehen, wobei bereits die unterschiedlichen Werkzeuge oder Werkzeugtypen und Peripheriegeräte-Anschlüsse bekannt sein müssen. Die an der Spritzgießmaschine vorhandenen Anschlüsse für Aktoren und Sensoren sowie die Aus- und Eingänge (analog oder digital) sind dabei herkömmlicherweise zweckgebunden und können nicht flexibel verwendet werden. So kann es sein, dass eine Spritzgießmaschine mit Anschlüssen für zwei hydraulische Ausstosser (auch Auswerfer genannt) und zwei hydraulische Kernzüge vorgesehen ist, in einem Werkzeug nun aber ein dritter Kernzug realisiert ist, der nunmehr an die - wie vorgenannt beschrieben - vorkonfigurierte Spritzgießmaschine mangels weiterer Anschlüsse nicht mehr anschließbar ist, obwohl eventuell noch entsprechende hydraulische oder elektrische Werkzeugachsen (oder auch pneumatische oder steuerungstechnische Anschlüsse) vorhanden wären, jedoch für andere Anwendungszwecke (z.B. für den Ausstosser) vorgesehen sind.

Aufgabe der vorliegenden Erfindung ist es daher, ein Verfahren zur Steuerung und Bedienung einer Produktionszelle sowie einer Steuereinrichtung anzugeben, mit dem eine an einer Spritzgießmaschine vorhandene Ausrüstung flexibel und bedarfsgerecht eingesetzt werden kann. Insbesondere soll der Bediener einer Spritzgießmaschine aus universell einsetzbaren Hardware-Elementen (Aktoren und Sensoren) Maschinensteuerungskomponenten erstellen können.

Diese Aufgabe wird durch die in den Ansprüchen 1 und 10 angegebenen Merkmale verfahrens- bzw. vorrichtungsmäßig gelöst.

Demgemäß ist ein Kerngedanke der vorliegenden Erfindung bei einem Verfahren zur Steuerung und Bedienung einer Produktionszelle sowie einer Steuerungsvorrichtung ausgehend von der WO 2006/089451 darin zu sehen, dass Maschinensteuerungskomponenten als Teil des Domänenmodells neu erstellt oder verändert werden und die Anschlüsse dieser erstellten oder veränderten Maschinensteuerungskomponenten dann vorhandenen und universell verwendbaren Hardware-Anschlüssen (also Hardware-Ein- und Ausgängen) zugewiesen werden. Dies geschieht in den Schritten, dass (i) eine Maschinensteuerungskomponenten aus einer Menge von vorgegebenen Komponententypen ausgewählt wird, (ii) der ausgewählten Maschinensteuerungskomponente mit einem bestimmten zugeordneten Komponententyp eine Technologie aus einer für den ausgewählten Komponententypen möglichen Technologien zugewiesen wird, wobei für jede Technologie eines Komponententypen eine passende Logik zur Ansteuerung der Achse oder des Geräts hinterlegt ist, welche die für die Technologie erforderlichen Schnittstellen mit umfasst und definiert und (iii) die Anschluss-Schnittstellen der so erstellten Maschinensteuerungskomponenten mit passenden Hardware-Ein- und -Ausgängen von vorhandenen Anschlüssen - also vorhandenen Anschlüssen für Aktoren und/oder Sensoren - der Spritzgießmaschine verbunden werden bzw. diesen zugewiesen werden.

Insgesamt kann also eine neue Maschinensteuerungskomponente erstellt werden, deren zugeordnete und in der hinterlegten Logik festgelegten Kommandos über den Ablaufeditor in den Produktionsablauf eingefügt werden können. Sobald eine neue Maschinensteuerungskomponente im Domänenmodell erstellt, den vorhandenen Hardware-Anschlüssen zugewiesen und aktiviert ist (wobei Aktivierung das Laden der Maschinensteuerungskomponente in die Maschinensteuerung bedeutet), kann die Maschinensteuerungskomponente auf dem Bildschirm dargestellt und über Bedientasten angesteuert werden. Dabei kann - wie im EP 2 100 197 A1 beschrieben - eine Bildschirmtastatur verwendet werden, welche es ermöglicht, die haptische Bedientasten dynamisch zu belegen, zu beschriften und mit einem Symbol zu versehen. Dies ist nun auch für die Maschinenkomponenten möglich, welche durch den Maschinenbediener erstellt werden.

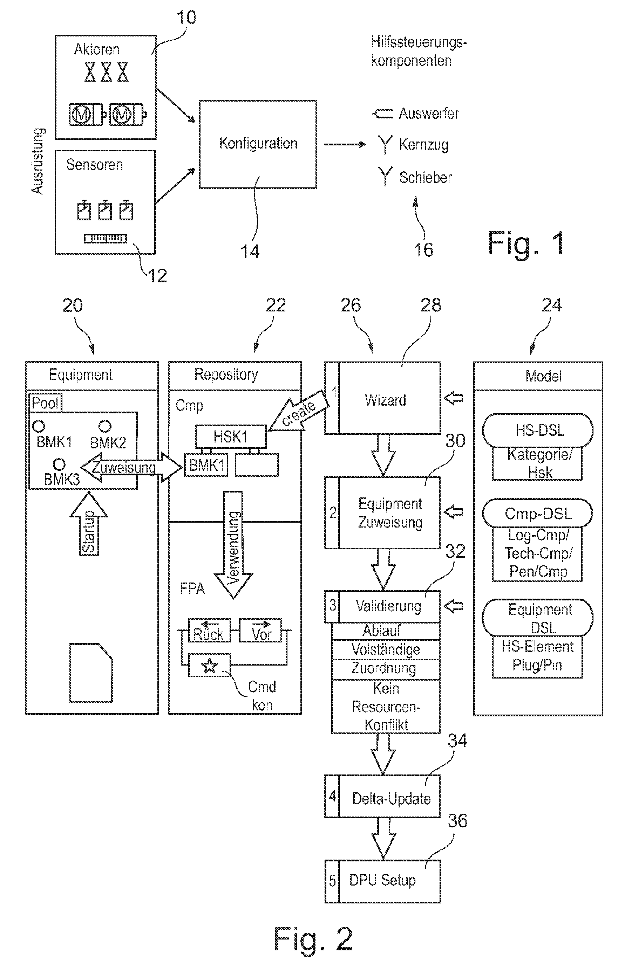

Das Symbol und die Beschriftung der so gestalteten Bildschirmtasten kann vom Benutzer vorzugsweise angepasst werden. In Fig. 2 ist dabei ein Schema dargestellt, mit der die Maschinensteuerungskomponenten (in Fig. 2 sind dies konkret Hilfssteuerungskomponenten) erzeugt werden können.

Gemäß Fig. 2 stehen in drei Speicherbereichen verschiedene Informationen zur Verfügung. In einem ersten Speicherbereich ist eine Beschreibung der bei der Spritzgießmaschine vorhandenen Hardware-Anschlüsse (also Hardware-Ein- und - Ausgänge) enthalten, die beim Starten der Maschine eingelesen werden. In dieser Hardwarebeschreibung der Hardware-Anschlüsse ist somit die Ausstattung und Ausrüstung der Spritzgießmaschine dargelegt. Dabei befinden sich in dieser Hardwarebeschreibung (Datei), die auch als Hardware-"Pool" bezeichnet wird, nur Hardware-Elemente, die physikalisch auf der Spritzgießmaschine auch vorhanden sind. In diesem Speicherbereich wird vorzugsweise auch die Verwendung der Ausrüstung verwaltet.

In dem Speicherbereich "Repository", der auch als Maschinensteuerungskomponenten-Pool bezeichnet wird, werden alle vorhandenen oder vom Bediener erstellten Maschinensteuerungskomponenten gespeichert und stehen anschließend im Ablaufeditor zur Verfügung. Damit können die Kommandos dieser Maschinensteuerungskomponenten im Produktionsablauf verwendet werden.

Im Speicherbereich "Model" ist die gesamte Logik hinterlegt. Unter anderem werden auch die verschiedenen Elemente und Maschinensteuerungskomponenten mittels der Domänensprache beschrieben.

Beim Erstellen einer neuen Maschinensteuerungskomponente (dies wird nachfolgend am Beispiel einer Hilfssteuerungskomponente beschrieben) wird beispielsweise mittels eines Softwareassistenten (auch Wizard genannt) eine Maschinensteuerungskomponente nach Wunsch und soweit technisch sinnvoll generiert. Ein Benutzer oder Einrichter wählt dazu zunächst aus einer Menge von vorgegebenen Komponententypen eine Maschinensteuerungskomponente aus (z.B. Standard-Kernzug) und weist dieser Maschinensteuerungskomponenten mit dem ausgewählten Komponententyp daraufhin eine Technologie aus einer Menge von zu diesem Komponententypen vorgegebenen Technologien zu. Dabei kann es sich bei dem Komponententypen beispielsweise um einen Ausstosser handeln und bei der Technologie z.B. darum, ob der Ausstosser hydraulisch, pneumatisch oder elektrisch betriebenen ist. In der Rechner-/Speichereinrichtung ist dabei angegeben, wie jeder Komponententyp aufgebaut ist und welche Technologien dafür zulässig sind.

Nachdem der Komponententyp und die Technologie für eine neue Maschinensteuerungskomponente bekannt sind, kann nun der Softwareassistent abgeschlossen, die Maschinensteuerungskomponente erzeugt und im Maschinensteuerungskomponenten-Pool abgelegt werden. Ab diesem Zeitpunkt kann die Maschinensteuerungskomponente außerhalb der Maschinenkonfiguration (z.B. im Ablaufeditor) verwendet werden. Eine Aktivierung in der Maschinensteuerung ist zu diesem Zeitpunkt jedoch noch nicht möglich, da die Zuweisung zu der auf der Maschine vorhandenen Hardware-Anschlüsse fehlt. Mit anderen Worten ist die Maschinensteuerungskomponente zunächst im Domänenmodell erzeugt und muss nun mit der physikalisch vorhandenen Umgebung in Übereinstimmung gebracht werden. Zu diesem Zweck verbindet ein Benutzer die vom Softwareassistenten erzeugten Anschluss-Schnittstellen der Maschinensteuerungskomponente mit den an der Spritzgießmaschine tatsächlich vorhandenen Anschlüssen, nämlich den Hardware-Ein- und Ausgängen (nachfolgend auch Hardwareelemente genannt) aus dem Hardware-Pool. Dabei ist die Steuerung so aufgebaut, dass nur passende Hardwareelemente mit einem korrekten Typ dem jeweiligen Anschluss der Maschinensteuerungskomponente zugewiesen werden können.

Nachdem die Maschinensteuerungskomponente erstellt und in geeigneter Weise den vorhandenen Hardwareelementen zugewiesen ist, können Kommandos der Komponente in einen Maschinenablauf (z.B. den Produktionsablauf) eingefügt werden. Diese neue Maschinenkonfiguration muss der Benutzer auf der Maschinensteuerung aktivieren. Bei der Aktivierung der neuen Maschinenkonfiguration werden verschiedene Prüfungen und Validierungen durchgeführt, wobei die Steuerung so ausgebildet ist, dass die Prüfung und Validierung beispielsweise eine unvollständige Hardwarezuordnung zu den Anschluss-Schnittstellen der Maschinensteuerungskomponenten oder auch eine Mehrfachverwendung von Hardwareelementen bei mehreren Maschinensteuerungskomponenten erkennt.

Insbesondere kann beim Aktivieren einer neuen Konfiguration auf der Maschinensteuerung die Differenz zwischen der neuen und der aktuellen geladenen Maschinenkonfiguration berechnet und nur die Differenz zum bisherigen Produktionsablauf auf der Maschinensteuerung geladen werden.

In der Maschinensteuerung werden die neuen Komponenten nunmehr instanziert und verbunden und die nicht mehr gebrauchten Komponenten gelöscht sowie veränderte Komponenten angepasst.

Die gleiche Vorgehensweise kann man bei der Änderung von vorhandenen Maschinensteuerungskomponenten durchführen, beispielsweise dann, wenn ein hydraulischer Ausstosser durch einen elektrischen Ausstosser ersetzt werden soll oder wenn eine Maschinensteuerungskomponente mit anderen Hardware-Ein- oder Ausgängen verbunden werden soll.

Die vorliegende Erfindung wird nachfolgend insbesondere anhand der Einbindung von Hilfssteuerungskomponenten erläutert. Diese Hilfssteuerungskomponenten sind vom Einrichter konfigurierte Maschinensteuerungskomponenten, die hauptsächlich zur Steuerung von Werkzeugfunktionen oder Peripheriegeräten verwendet werden. Neben einfachen Hilfssteuerungskomponenten, die beispielsweise nur einen Aktor besitzen (z.B. Ausstosser, Kernzüge, Luftventile) gibt es auch komplexe Hilfssteuerungskomponenten mit mehreren Aktoren (z. B. Teleskop-Ausstosser, Drehteller, Indexplatte, etc.). Hilfssteuerungskomponenten können aber auch vorkonfiguriert sein, ihre Daten werden dann mit einem Datensatz ausgeliefert, der in die Maschinensteuerung eingelesen werden kann.

Bei der Realisierung der Erfindung ist darauf zu achten, dass die Maschinensteuerungskomponenten, insbesondere die Hilfssteuerungskomponenten, so konfiguriert werden können, dass sie die reale Komponente möglichst treffend darstellen.

Ein Kernanliegen der vorliegenden Erfindung ist, dass die an der Maschine vorhandene Ausrüstung flexibel und bedarfsgerecht eingesetzt werden kann, wobei die Konfiguration und Bedienung der Spritzgießmaschine inklusive der Hilfssteuerung einfach und durchgängig sein sollte. Insgesamt sollen beispielsweise Hilfssteuerungskomponenten wie normale Maschinensteuerungskomponenten verwendbar und parametrierbar sein. Hinsichtlich der verwendeten Begriffe unterscheidet man vorliegend:
- Technologie
- Anschluss
- Komponententyp
- Kommando
- Erscheinungsbild
- Komponentenkategorie
- Gruppe

Die Technologie bildet die Basis einer Maschinensteuerungskomponente. Sie enthält dessen Logik, bestimmt die Anzahl und die Art der Anschlüsse sowie die Technologiekommandos, die von dem Komponententyp benutzt werden können. Beispielsweise stehen für Hilfssteuerungskomponenten folgende Technologien zur Verfügung:

| **Technologie** | **Anzahl Anschlüsse** | **Anschlusstyp** | **Verwendung** |
|---|---|---|---|
| Schalteingang | 1 | Schalteingang | Universell |
| Schaltausgang | 1 | Schaltausgang | Universell |
| Luftventil | n | Pneumatikventil | Pneumatikventil |
| Pneumatische Achse | 0-1 | Pneumatikventil | Ventile Richtung A und B (min. ein Ventil muss gesetzt sein) |
| | 0-1 | Pneumatikventil | |
| | 0-n | Positionsschalter | Endlage A |
| | 0-n | Positionsschalter | Endlage B |
| Hydraulische Achse | 1 | Hydraulikventil | Proportional- oder Servoventil |
| | 0-n | Positionsschalter | Endlage A |
| | 0-n | Positionsschalter | Endlage B |
| | 0-1 | Positionsschalter | Umschaltposition A |
| | 0-1 | Positionsschalter | Umschaltposition B |
| Hydraulische Achse mit Wegmessung | 1 | Hydraulikventil | Servoventil |
| | 0-n | Positionsschalter | Endlage A |
| | 0-n | Positionsschalter | Endlage B |
| | 1 | Wegmesssystem | Wegmesssystem |
| Elektrische Achse mit Wegmessung | 1 | Elektromotor | Motor, Umrichter und Resolver |
| | 0-1 | Positionsschalter | Endlage A |
| | 0-1 | Positionsschalter | Endlage B |

Überdies stehen beispielsweise die folgenden Anschlusstypen für die Anschluss-Schnittstellen zur Verfügung:

| **Anschlusstyp** | **Bemerkung** |
|---|---|
| Schalteingang | Potentialfreier Relaiseingang |
| Schaltausgang | Potentialfreier Kontaktausgang oder Halbleiterausgang |
| Positionsschalter | Einfacher digitaler Eingang |
| Pneumatikventil | Einfacher digitaler Ausgang |
| Hydraulikventil | Proportional- oder Servoventil |
| Elektromotor | Motor, Umrichter und Resolver |

Eine Anschluss-Schnittstelle repräsentiert dabei die Schnittstelle zu einem Betriebsmittel (z. B. Aktor oder Sensor).

Ein Komponententyp (z. B. Standard-Ausstosser oder Teleskop-Ausstosser) ist eine konkrete Ausprägung einer Maschinensteuerungs- oder Hilfssteuerungskategorie. Einem Komponententypen sind unter anderem ein Erscheinungsbild und Kommandos zugeordnet. Dabei sollen sich die Erscheinungsbilder aller Komponententypen einer Komponentenkategorie gleichen.

Mit einem Kommando können Aktionen einer Maschinen- oder Hilfssteuerungskomponente ausgelöst werden.

Jedem Komponententypen ist genau ein Erscheinungsbild zugeordnet.

In einer Komponentenkategorie werden alle Maschinen- oder Hilfssteuerungstypen zusammengefasst, die sich gleichartig verhalten. Z. B. werden der Standard-Ausstosser und der Teleskop-Ausstosser zur Hilfssteuerungskategorie "Ausstosser" zusammengefasst. Für die Hilfssteuerungskomponenten können beispielweise folgende Hilfssteuerungskategorien zur Verfügung stehen:
- Schalteingang
- Schaltausgang
- Blassteuerung
- Vakuumsteuerung
- Werkzeugbelüftung
- Werkzeugdüsenverschluss
- Ausstosser
- Kernzug
- Schieber
- Gewindekern
- Allgemeine Linearachse
- Allgemeine Rotationsachse
- Drehteller
- Indexplatte

Für den Fall, dass in Zukunft die Anzahl der Komponententypen noch wächst, können diese zusätzlich noch nach unterschiedlichen Kriterien gruppiert werden (z.B. Werkzeuggruppe und Peripheriegruppe oder Standardkomponenten und kundenspezifische Komponenten).

Hinsichtlich der Steuerungssoftware ist vorzugsweise ein geschichteter Aufbau gewählt. Diese Aufteilung entspricht in vielerlei Hinsicht dem Spiegelbild der realen Maschine, die aus einzelnen Bestandteilen zusammengesetzt ist.

In der obersten logischen Schicht eines Softwareaufbaus wird die Verwendung von technischen Komponenten festgelegt. Eine logische Komponente kann auf einer oder mehreren technischen Komponenten aufgesetzt werden. Sie repräsentiert einen größeren abgrenzbaren Bestandteil der Maschine oder des Werkzeugs. Allgemeine Linearachsen, Handling, Boost-Ausstosser oder Drehteller sind mögliche Vertreter dieser Schicht. Die logische Komponente ist für das korrekte Zusammenspiel ihrer zugewiesenen technischen Komponenten verantwortlich. Die von der logischen Komponente angebotenen Kommandos können direkt im Ablaufeditor verwendet werden.

Die logische Schicht gibt im weitern das Erscheinungsbild (z.B. das Symbol und die Bezeichnung der Komponente und der Kommandos) der Komponente vor. Das Erscheinungsbild (das Symbol und insbesondere die Bezeichnung der Komponenten und Kommandos) kann vom Maschinenbediener angepasst werden.

Weitere Merkmale der Erfindung sind in den Unteransprüchen festgelegt.

Die vorliegende Erfindung wird nachfolgend anhand eines konkreten Ausführungsbeispieles und mit Bezug auf die beigefügten Zeichnungen näher erläutert. Die Zeichnungen zeigen in
- Fig. 1: eine schematische Darstellung der Zuordnung von tatsächlich vorhandenen Hardware-Anschlüssen von Aktoren und Sensoren zu vorhandenen Hilfssteuerungskomponenten,
- Fig. 2: eine schematische Darstellung der Schritte zur Erzeugung einer Hilfssteuerungskomponente unter Rückgriff auf abgespeicherte Informationen,
- Fig. 3: eine schematische Darstellung des Zusammenspiels von Ablauf, Konfiguration der Hilfssteuerungskomponente und Eingabevorrichtung,
- Fig. 4a: einen Bildschirmausschnitt mit einer Übersicht über tatsächlich vorhandene Anschlüsse für Aktoren/Sensoren (Hardware-Ein- und Ausgänge),
- Fig. 4b: eine Erläuterung des Bildschirmausschnitts auf Fig. 4a anhand der zur Verfügung stehenden Anschlüsse für die Schalteingänge,
- Fig. 5: ein Bildschirmausschnitt mit einer Bildschirmdarstellung von vorhandenen oder erzeugten Hilfssteuerungskomponenten,
- Fig. 6a - 6d: verschiedene Bildschirmfenster zur Einrichtung einer neuen Hilfssteuerungskomponente,
- Fig. 7: die Darstellung der neu eingerichteten Hilfssteuerungskomponente "Kernzug" in einer Bildschirmdarstellung,
- Fig. 8: eine Bildschirmdarstellung wie Fig. 7, aus der die Zuordnung der Anschlüsse zu den Hardwarekomponenten ersichtlich ist,
- Fig. 9: eine Bildschirmdarstellung wie Fig. 7, aus der die Zuordnung der Anschluss-Schnittstellen zu den Anschlüssen der tatsächlich vorhandenen Hardwarekomponenten ersichtlich ist,
- Fig. 10a - 10e: verschiedene Bildschirmfenster zur Einrichtung einer weiteren neuen Hilfssteuerungskomponente und
- Fig. 11: eine Übersicht über vorhandene oder erzeugte Hilfssteuerungskomponenten.

Bei einer Spritzgießmaschine für eine Produktionszelle sind gemäß der vorliegenden Erfindung verschiedene Anschlüsse für Aktoren und Sensoren mit Aus- und Eingängen (diese können analog oder digital sein) vorgesehen. Diese vorhandenen Hardwarekomponenten (Hardwareelemente mit Hardware-Ein- und - Ausgängen) werden in Fig. 1 durch die Bezugszeichen 10 (Aktoren) und 12 (Sensoren) dargestellt. Auf der anderen Seite werden für den Einsatz eines bestimmten Werkzeuges bzw. bestimmter Peripheriegeräte Hilfssteuerungskomponenten benötigt, die gemäß der vorliegenden Erfindung erzeugt werden können und in Fig. 1 mit dem Bezugszeichen 16 gekennzeichnet sind. Die vorliegende Erfindung beschäftigt sich damit, die physikalisch vorhandenen Hardwareelemente, insbesondere die Hardware-Ein- und Ausgänge der Aktoren und Sensoren mit den Anschluss-Schnittstellen der Hilfssteuerungskomponenten zu verbinden und richtig zuzuweisen.

Die Vorgehensweise bei der Erzeugung einer neuen Hilfssteuerungskomponente wird aus Fig. 2 klar. In einem Speicherbereich, der mit "Equipment" (dies entspricht "Ausrüstung") bezeichnet ist, werden die tatsächlich vorhandenen Hardwarekomponenten (Anschlussmöglichkeiten) einer Maschine vorgehalten. Diese tatsächlich vorhandenen Hardwarekomponenten (Anschlussmöglichkeiten inkl. deren Belegung) werden beim Start der Maschine beispielsweise aus einer Datei (beispielsweise XML-Datei oder andere Datei mit strukturiertem Inhalt). eingelesen und beschreiben die Ausrüstung der Spritzgießmaschine. In diesem Speicherbereich sind damit die vorhandenen Hardware-Ein- und Ausgänge in einem Hardware-Pool abgelegt. Auch wird die Verwendung der vorhandenen Ausrüstung in diesem Bereich verwaltet.

In dem Hardware-Pool befinden sich damit nur Elemente, die physikalisch auf der Maschine auch realisiert sind, wobei die einzelnen Elemente über eine Betriebsmittelkennzeichnung (BMK) identifiziert werden. In dem Speicherbereich, der mit "Repository" bezeichnet wird (auch als Maschinensteuerungskomponenten-Pool bezeichnet), werden die vom Bediener erstellten Hilfssteuerungskomponenten gespeichert und stehen anschließend für den Ablaufeditor zur Verfügung, was durch den Pfeil Verwendung in dem Bereich "FPA" dargestellt wird.

Bei der Erstellung einer neuen Hilfssteuerungskomponente werden beim vorliegenden Beispiel die unter Bezugszeichen 26 dargestellten fünf Schritte durchgeführt. Wie mit dem Bezugszeichen 28 angegeben, wird im ersten Schritt mit einem Softwareassistenten (sogenannter Wizard) zunächst eine Hilfssteuerungskomponente soweit möglich nach Wunsch zusammengestellt.

Dazu wählt man zunächst aus einer Menge von vorgegebenen Hilfssteuerungstypen einen gewünschten Typ aus. Für jeden Hilfssteuerungstyp stehen nun bestimmte Technologien zur Verfügung. Aus dieser Menge von Möglichkeiten von Technologien für einen Hilfssteuerungstyp wählt man nun eine Technologie aus und fügt diese der Hilfssteuerungskomponente hinzu. Die Technologie gibt beispielsweise die Art und Weise an, in der die Hilfssteuerungskomponente betrieben werden soll. Die Technologie berücksichtigt dabei die Hilfssteuerungsachsen, wie später noch klarwird. Da für jeden Hilfssteuerungstyp hinterlegt ist, wie diese Hilfssteuerung aufgebaut ist, weiß die Steuerung nun für die gewählte Hilfssteuerungskomponente den zulässigen Hilfssteuerungstyp und die zulässige Technologie.

Nachdem Typ und Technologie der Hilfssteuerung bekannt sind, kann der Softwareassistent abgeschlossen werden, womit die Hilfssteuerungskomponente softwaretechnisch im Domänenmodell erstellt und im "Repository" (Maschinensteuerungskomponenten-Pool) abgelegt wird. Nunmehr kann die Hilfssteuerungskomponente im Ablaufeditor verwendet werden. Da die Hilfssteuerungskomponente jedoch noch nicht den vorhandenen Hardwareelementen zugewiesen ist, ist eine Aktivierung für die Maschinensteuerung zunächst noch nicht möglich.

In einem nächsten Schritt (Bezugsziffer 30) verbindet der Benutzer die vorher über den Softwareassistenten geschaffenen Anschluss-Schnittstellen also Ein- und Ausgänge der Hilfssteuerungskomponente mit den an der Spritzgießmaschine tatsächlich vorhandenen Hardwareelementen, die in dem Hardware-Pool des Speicherungsbereichs (Bezugsziffer 20) abgelegt sind. Dabei prüft die Steuereinrichtung, dass nur passende Hardwareelemente eines korrekten Typs zugewiesen werden.

Im nächsten Schritt (Bezugsziffer 32) erfolgt nach der Erstellung der Hilfssteuerungskomponente und der Zuweisung der Anschlüsse die Aktivierung der neuen Konfiguration auf der Maschinensteuerung. Dabei werden von der Maschinensteuerung verschiedene Validierungen und Prüfungen durchgeführt. Die Validierung und Prüfung erkennt unvollständige Hardwarezuordnungen der Hilfssteuerungskomponente oder auch Mehrfachverwendungen von Hardwareelementen in mehreren Hilfssteuerungskomponenten.

Nach der Prüfung und Validierung erfolgt in Schritt (Bezugsziffer 34) das Laden der aktuellen Konfiguration in die Maschinensteuerung. Dazu wird beispielsweise die Differenz zwischen der neuen und aktuellen geladenen Maschinenkonfiguration berechnet und nur die Differenz in die Maschinensteuerung geladen (Delta-Update).

Im nächsten Schritt (DPU-Setup, Bezugsziffer 36) werden die neuen Maschinensteuerungskomponenten in den Programmcode aufgesetzt, die nicht mehr gebrauchten Maschinensteuerungskomponenten gelöscht und veränderte Maschinensteuerungskomponenten angepasst.

Damit ist die Erstellung einer neuen Hilfssteuerungskomponente abgeschlossen. Die Hilfssteuerungskomponente ist damit aber noch nicht in den Produktionsablauf oder einen anderen Maschinenablauf eingebunden. Dies wird nachfolgend noch erläutert.

Nachdem in Fig. 2 eher ein abstraktes Modell der Realisierung der vorliegenden Erfindung beschrieben ist, werden nachfolgend konkrete Ausführungsbeispiele beschrieben.

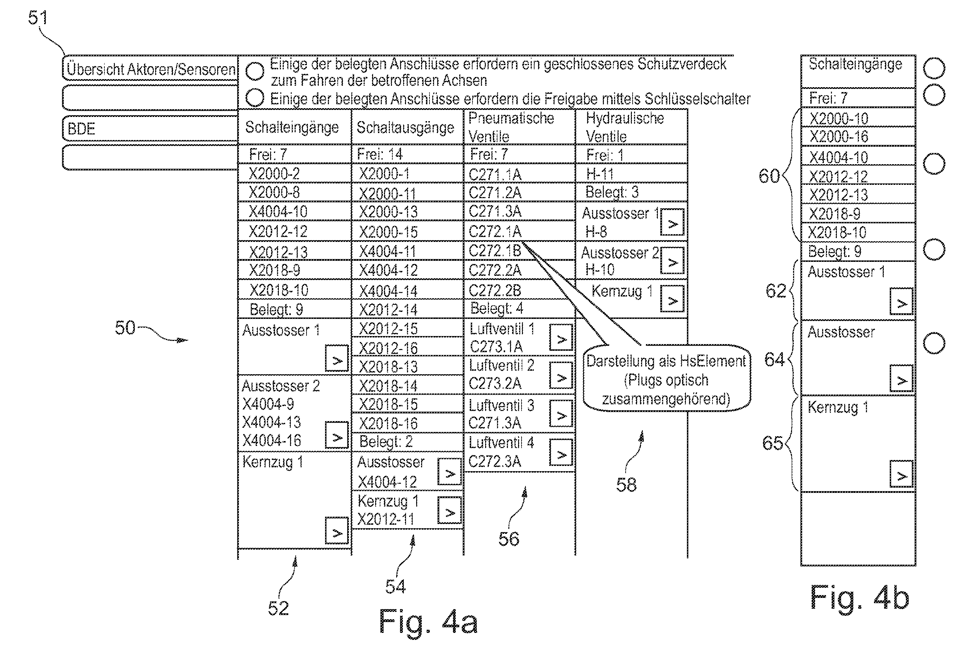

In Fig. 4a ist eine Bildschirmdarstellung der auf einer Maschine vorhandenen Hardware-Anschlüsse für Aktoren und Sensoren dargestellt. Dabei ist softwaremäßig der Reiter 51 "Übersicht Aktoren/Sensoren" aktiviert. Insofern wird faktisch die im Speicherbereich 20 dargestellte Hardwareausrüstung angezeigt; dies stellt den Hardware-Pool dar. Angezeigt werden vorliegend beispielsweise alle vorhandenen Anschlüsse zu den Schalteingängen, Schaltausgängen, pneumatischen Ventilen und hydraulischen Ventilen. Dabei werden die jeweiligen Anschlüsse in Fig. 4a nach freien Anschlüsse und belegten Anschlüssen sortiert. In Fig. 4b ist die Spalte 52 zu den "Schalteingängen" herausgegriffen, wobei sichtbar ist, dass die Anschlüsse unter Bezugsziffer 60 als freie Schalteingangsanschlüsse der Spritzgießmaschine zur Verfügung stehen. Die unter den Bezugsziffern 62, 64 und 65 angeordneten Anschlüsse für die Schalteingänge sind den Hilfssteuerungskomponenten "Ausstosser 1", "Ausstosser 2" und "Kernzug" zugeordnet.

Für den Bediener ist hinsichtlich der Darstellung in Fig. 4a somit klar, dass bei den Schalteingängen noch sieben freie Anschlüsse, bei den Schaltausgängen noch 14 freie Anschlüsse, bei den pneumatischen Ventilen noch sieben freie Anschlüsse und bei den hydraulischen Ventilen noch ein freier Anschluss vorhanden sind. Diese freien Anschlüsse können nun für weitere Hilfssteuerungskomponenten verwendet werden.

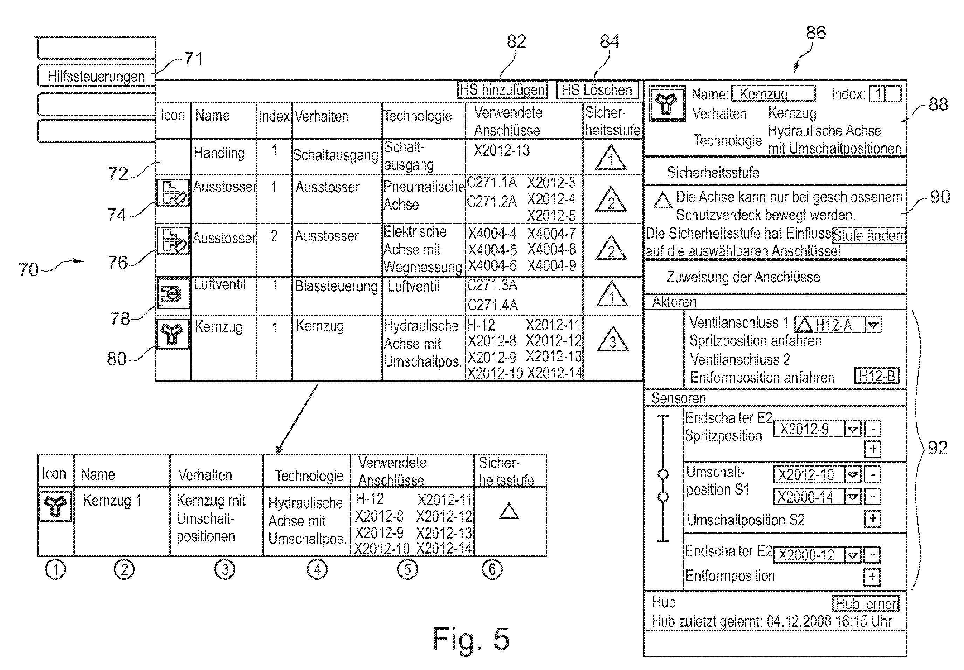

In Fig. 5, in der eine Bildschirmdarstellung mit einer Übersicht über die erstellten Hilfssteuerungskomponenten zu erkennen ist, ist softwaremäßig der Reiter 71 "Hilfssteuerungen" aktiviert. Damit werden die im Speicherbereich 22 "Repository" (Maschinensteuerungskomponenten-Pool) hinterlegten Hilfssteuerungskomponenten dargestellt. In den mit den Bezugszeichen 72, 74, 76, 78 und 80 bezeichneten Zeilen sind die fünf Hilfssteuerungskomponenten "Handling", "Ausstosser 1", "Ausstosser 2", "Luftventil" und "Kernzug" mit ihrem jeweiligen Verhalten, der zugeordneten Technologie, den verwendeten Anschlüssen sowie der hinterlegten Sicherheitsstufe dargestellt.

In Fig. 5 ist von den fünf Hilfssteuerungskomponenten der durch das Bezugszeichen 80 in der letzten Zeile dargestellte Kernzug ausgewählt, wodurch die zugehörige Spezifikation im mit der Bezugsziffer 86 bezeichneten Bildschirmbereich dargestellt ist. Im Einzelnen werden im Bildschirmabschnitt 88 der Name, das Verhalten und die Technologie der Hilfssteuerungskomponente angegeben. Vorliegend handelt es sich um einen Kernzug, dem die Technologie mit einer hydraulischen Achse und einer Umschaltposition zugeordnet ist. Als Sicherheitsstufe im Bildschirmbereich 90 ist die Stufe 3 gewählt, gemäß der die Achse nur bei geschlossenem Schutzverdeck bewegt werden kann. Im Bildschirmbereich 92 sind die Anschluss-Schnittstellen der Technologie "hydraulischen Achse mit Umschaltpositionen" mit den jeweils in den Feldern genannten Hardware-Eingängen oder -Ausgängen für den Ventilanschluss, den Endschalter sowie dem Positionsschalter für die Umschaltposition verbunden. Durch eine entsprechend andere Zuweisung können die zugewiesenen Hardware-Ein- oder Ausgänge in den Feldern auch verändert werden.

Damit erhält man mit dem in Fig. 5 dargestellten Bildschirmausschnitt einen Überblick über die bereits bestehenden Hilfssteuerungskomponenten sowie deren Konfiguration.

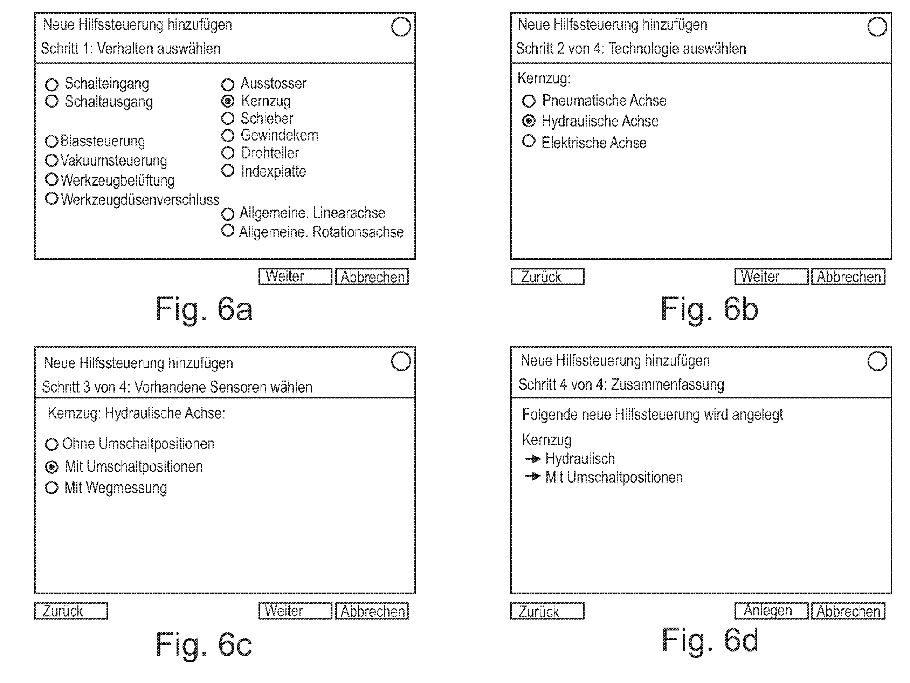

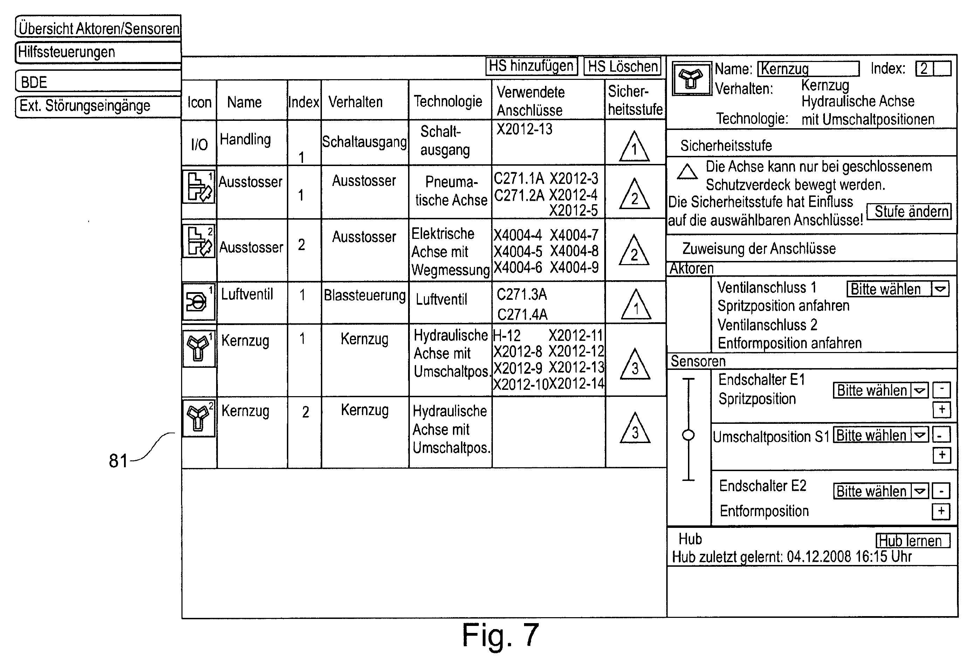

Will man zu den vorhandenen Hilfssteuerungskomponenten eine neue Hilfssteuerungskomponente hinzufügen, so betätigt man den Betätigungsknopf 82 "HS hinzufügen". Daraufhin wird ein Fenster mit einem Softwareassistenten (auch Wizard genannt) geöffnet, in dem eine vorgegebene Menge von Hilfssteuerungstypen angegeben ist (vgl. Fig. 6a). Nachdem in Fig. 6a als Hilfssteuerungstyp ein Kernzug ausgewählt wurde, kann man durch die Betätigung des Betätigungsknopfes "Weiter" im Schritt 2 die Technologie auswählen (vgl. Fig. 6b). Für den Hilfssteuerungstyp "Kernzug" werden drei Technologien angeboten: nämlich pneumatisch ("pneumatische Achse"), hydraulisch ("hydraulische Achse") und elektrisch betriebene Achse ("elektrische Achse"). Aus diesen angebotenen Technologien kann man nunmehr eine auswählen. Sollte im Schritt 1 ein anderer Hilfssteuerungstyp ausgewählt werden, so würden natürlich andere Technologien angeboten werden. Betätigt man den Betätigungsknopf "Weiter" in Fig. 6b, so kommt man zum Schritt 3, wo man beim Kernzug mit hydraulischer Achse weiter angeben kann, ob eine Umschaltposition vorhanden ist (Sensor). Wählt man dies entsprechend der Gegebenheit aus und betätigt den Betätigungsknopf "Weiter" in Fig. 6c, so wird der Softwareassistent abgeschlossen und die Hilfssteuerungskomponente Kernzug mit den Spezifizierungen hydraulisch und der entsprechenden Umschaltposition-Konfiguration erzeugt. Diese Hilfssteuerungskomponente ist ab diesem Zeitpunkt auch in dem Speicherbereich 22 unter "Repository" als neue Hilfssteuerungskomponente (Bezugszeichen 81, Fig.7) aufgeführt und kann nun auch im Ablaufeditor verwendet werden.

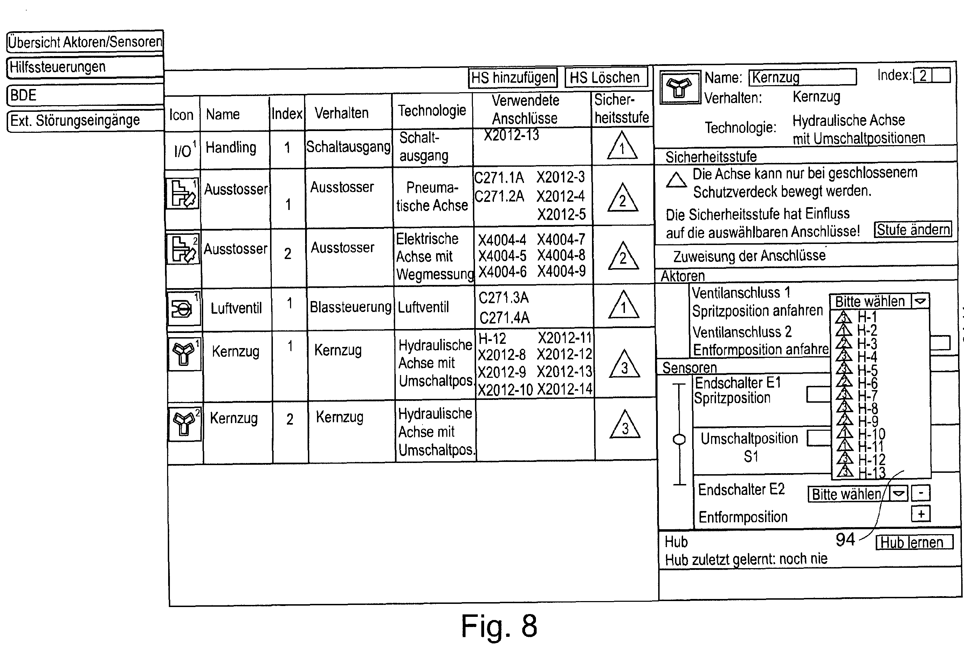

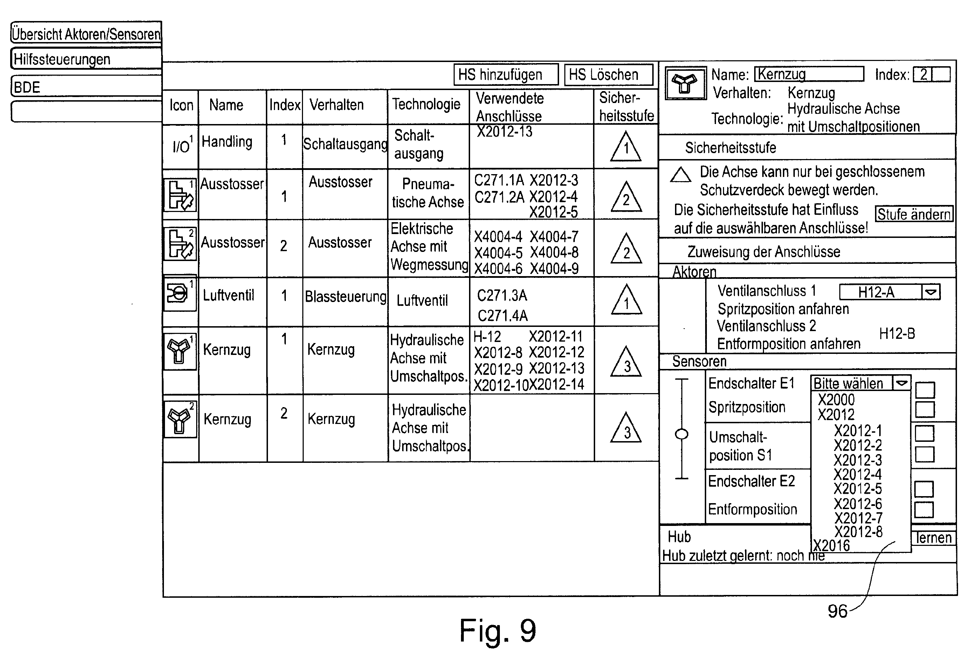

Aufgrund der Auswahl des Hilfssteuerungstypen und der Technologie ist aus der im Speicherbereich 24 "Modell" hinterlegten Logik klar, welche Anschlüsse der Hilfssteuerungskomponente zugewiesen werden müssen. Vorliegend sind dies bei der Hilfssteuerungskomponente "Kernzug 2" die Anschlüsse "Ventilanschluss 1 - Spritzposition Anfahren", "Endschalter E1 - Spritzposition", "Umschaltposition S1" und "Endschalter E2 - in Entformposition". Die Anschluss-Schnittstellen für die Aktoren bzw. Sensoren müssen nun mit den tatsächlich auf der Spritzgießmaschine vorhandenen Hardwareelementen verbunden werden. Dazu werden - wie in Fig. 8 dargestellt - bei der Zuordnung eines Hardwareelements zum Ventilanschluss 1 durch Öffnen des Pull-down-Menüs die verfügbaren Ventilanschlüsse aufgelistet, aus denen nun ein geeigneter Anschluss ausgewählt werden kann. Vorliegend ist dies der Anschluss H12-A. Ventilanschluss 2 wird automatisch dem zweiten Anschluss H12-B des gewählten Ventils zugeordnet. Jedem Ventilanschluss ist zudem eine Fahrtrichtung zugeordnet. Vorliegend ist dies "Spritzposition anfahren" für Ventilanschluss 1 und "Entformposition anfahren" für Ventilanschluss 2. Weiterhin können auch für die Sensoren die entsprechenden Hardwareelemente über Pull-down-Menüs zugeordnet werden. Dies ist in Fig. 9 über das Pull-down-Menü 96 beispielsweise für den Endschalter E1 dargestellt. Auf diese Art und Weise kann man nun für die Anschlüsse der neu erstellten Hilfssteuerungskomponente die jeweilig zur Verfügung stehenden Hardwareelemente zuordnen. Ist dies geschehen, so werden die zugeordneten Anschlüsse ebenfalls in der Bildschirmdarstellung gezeigt.

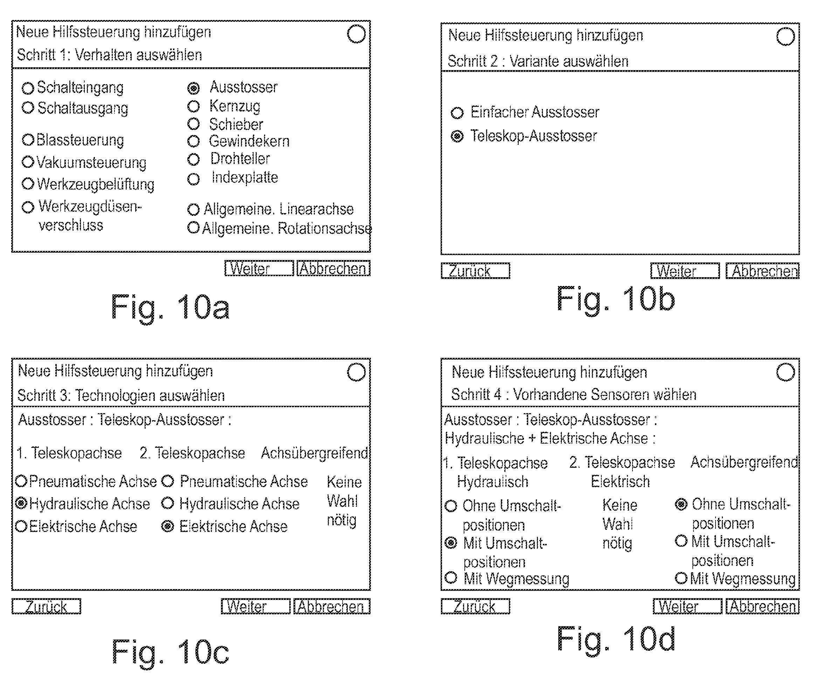

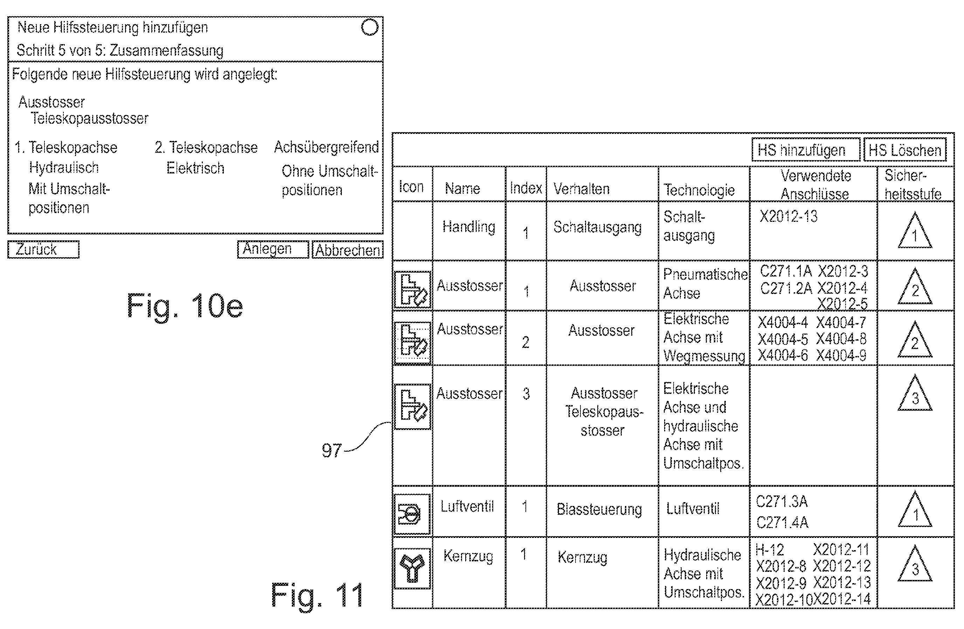

In den Fig. 10a - 10e ist die Erstellung einer weiteren Hilfssteuerungskomponente dargestellt. Bei Betätigen des Betätigungsknopfes 82 "HS Hinzufügen" öffnet sich wiederum der Softwareassistent, mit dem in Schritt 1 (vgl. Fig. 10a) ein "Ausstosser" ausgewählt wird und bei Betätigung des Betätigungsknopfes "Weiter" als Varianten entweder ein "einfacher Ausstosser" oder ein "Teleskop-Ausstosser" gewählt werden kann (vgl. Fig. 10b). Nach Auswahl der Variante "Teleskop-Ausstosser" werden nunmehr verschiedenste Technologien angeboten, nämlich die Art der Achsen für die erste und zweite Teleskopachse (vgl. Fig. 10c). Nach Auswahl der Technologie kann man die bei dem Teleskop-Ausstosser vorhandenen Sensoren in Fig. 10d wählen und nach Abschluss dieses Schrittes ist gemäß Fig. 10e die entsprechende Hilfssteuerungskomponente hinzugefügt. Werden anschließend die entsprechenden Anschlüsse zugewiesen, so wird die neu generierte Hilfssteuerungskomponente in Fig. 11 wie unter Bezugszeichen 97 dargestellt. Nachdem die Hilfssteuerungskomponenten nunmehr erzeugt, den Hardware-Ein- und Ausgängen zugeordnet und aktiviert worden sind, können sie in üblicher Weise und wie in der WO 2006/089451 im Domainmodell verwendet werden, wobei der Bediener die Hilfssteuerungskomponente in der Modellierung des Produktionsablaufs verwenden kann. Führt er eine solche Modellierung und damit eine Anpassung des Produktionsablaufs durch, so muss die neue Konfiguration in die Maschinensteuerung überführt werden. Man kann auch sagen, die neue Konfiguration muss auf der Maschinensteuerung aktiviert werden. Dabei wird geprüft, ob die Zuordnung der Hardwareelemente zu den Hilfssteuerungskomponenten vollständig oder unvollständig ist oder eine Mehrfachbelegung von Hardwareelementen durchgeführt worden ist (Validierung). Gemäß einer bevorzugten Ausführungsform wird nur die Differenz zwischen der neuen und der aktuellen geladenen Konfiguration neu berechnet und in die Maschinensteuerung geladen.

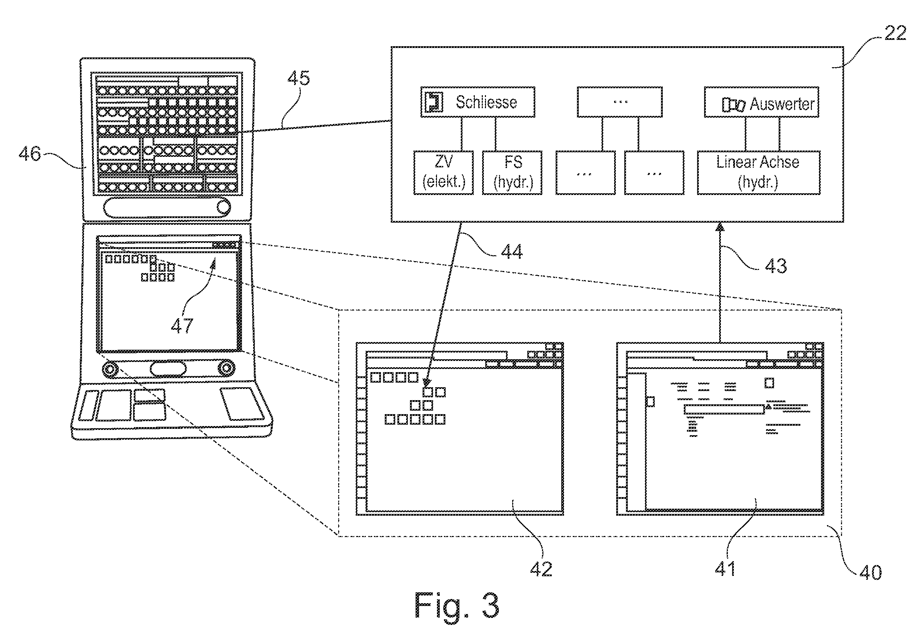

Der vorgenannt beschriebene Ablauf ist in anderer Darstellungsweise in Fig. 3 dargestellt. In Fig. 3 ist ein Bedienterminal mit einem unteren Bildschirm zu erkennen, auf dem vorliegend ein Maschinenablauf in der Domänensprache angezeigt ist. Im darüber angeordneten Bildschirm ist eine Bildschirmtastatur dargestellt, welche es ermöglicht, die haptische Bedientasten dynamisch zu belegen, zu beschriften und mit einem Symbol zu versehen. (vgl. auch EP 2 100 197A1).

Zunächst wird auf dem unteren Bildschirm - wie im rechten Teil der Bildschirmseite 40 angezeigt - der Komponentenkonfigurator 41 aufgerufen. Mit Hilfe des Komponentenkonfigurators 41 können vom Bediener mit dem Softwareassistenten maschinenspezifische Komponenten (z.B. Hilfssteuerungskomponenten) erzeugt werden. Sobald der Komponententyp und die Technologie - wie vorgenannt bereits erläutert - bestimmt sind, kann die Komponente im Komponenten-Repository 22 angelegt werden (Schritt 43 - "Erzeugen und Ablegen der neuen Hilfssteuerungskomponente"). Damit steht die Hilfssteuerungskomponente für den Ablaufeditor zur Verfügung. Damit die neue Hilfssteuerungskomponente aktiviert werden kann, müssen noch die Anschlüsse der jeweiligen Komponente belegt werden. Im nächsten Schritte (Schritt 44 - "Einfügen des Kommandos in den Ablauf") werden die Kommandos der Hilfssteuerungskomponente aus dem Repository 22 im Ablaufeditor angeboten und können so vom Bediener an geeigneter Stelle in den Produktionsablauf eingefügt werden.

Durch das Aktivieren werden alle Änderungen (beispielsweise neue Hilfssteuerungskomponente, angepasster Ablauf, geänderte Parametrierung etc. - Bezugszeichen 47 - Schritt:" Änderung aktivieren) auf die Maschinensteuerung geladen. Änderungen können vorzugsweise nur aktiviert werden, wenn alle Angaben korrekt und vollständig ausgeführt sind (Validierung). Sobald eine neue Hilfssteuerungskomponente erfolgreich aktiviert wurde, wird dies durch die entsprechende Belegung an den Bedientasten angezeigt (Bezugszeichen 45 - Anzeige an den Bedientasten).

In gleicher Weise können Hilfssteuerungskomponenten, die nicht mehr benötigt werden, zunächst angewählt und dann über den Betätigungsknopf 84 "HS Löschen" gelöscht werden. Damit kann man beispielsweise bestimmte Hardwareelemente, die für andere Hilfssteuerungskomponenten benötigt werden, wieder freigeben.

Auch ist es möglich, auf die vorgenannte Weise eine Konfiguration für eine Hilfssteuerungskomponente zu ändern, indem beispielsweise eine andere Technologie gewählt wird, eine andere Sicherheitsstufe oder eine andere Belegung der Anschlüsse.

Insgesamt bietet die vorliegende Erfindung einen flexiblen Einsatz von Spritzgießmaschinen in Produktionszellen. Dabei können an einer Maschine vorgesehene Hardwareelemente wie Anschlüsse für Aktoren und Sensoren universell einsetzbar ausgestattet werden. Anhand dieser universell einsetzbaren Anschlüsse für Aktoren und Sensoren sind Hilfssteuerungskomponenten erzeugbar und konfigurierbar, wie sie in neuen Formwerkzeugen oder Peripheriegeräten vorgesehen sind. Damit lassen sich in bestimmter Weise mit Hardwareelementen ausgestattete Spritzgießmaschinen in möglichst variabler Weise verwenden.

### Bezugszeichenliste

- 10: Gesamtheit der zur Verfügung stehenden Aktoren mit Anschlüssen (Ein- und Ausgänge)
- 12: Gesamtheit der zur Verfügung stehenden Sensoren mit Anschlüssen (Ein- und Ausgänge)
- 14: Konfiguration
- 16: Erstellte Maschinensteuerungskomponenten, hier Hilfssteuerungskomponenten
- 20: Speicherbereich für vorhandene Hardware-Anschlüsse an der Spritzgießmaschine oder der Produktionszelle
- 22: Speicherbereich für erstellte Maschinensteuerungskomponenten
- 24: Speicherbereich für Modelle der Maschinensteuerungskomponenten
- 26: Fünf Schritte zur Einrichtung einer Hilfssteuerungskomponente für den Maschinenablauf
- 28: Schritt "Erstellen einer Steuerungskomponente mit Wizard"
- 30: Schritt "Zuweisung der Hardware-Anschlüsse (Equipment Zuweisung)
- 32: Schritt "Prüfung und Validierung der Steuerungskomponente und Zuweisung zur Steuerungskomponente"
- 34: Schritt "Ermittlung der Unterschiede in bisheriger und neuer Maschinenkonfiguration"
- 36: Schritt "Anpassung des Ablaufprogramms an neue Maschinenkonfiguration"
- 40: Bildschirmseite
- 41: Komponenten-Konfigurator
- 42: Ablaufeditor
- 43: Schritt: Erzeugen der neuen Hilfssteuerungskomponente
- 44: Schritt: Einfügen des Kommandos in den Ablauf
- 45: Anzeigen der Bedientasten
- 46: Bedienterminal
- 47: Schritt: Aktivieren der Änderung
- 50: Bildschirmausschnitt mit Übersicht über die Hardware-Ein- und Ausgänge der vorhandenen Aktoren und Sensoren
- 51: Reiter "Übersicht Aktoren/Sensoren"
- 52: Übersicht über frei und belegte Anschlüsse für Schalteingänge
- 54: Übersicht über frei und belegte Anschlüsse für Schaltausgänge
- 56: Übersicht über freie und belegte Anschlüsse für pneumatische Ventile
- 58: Übersicht über freie und belegte Anschlüsse für hydraulische Ventile
- 60: Übersicht über frei Anschlüsse für Schalteingänge
- 62: Übersicht über der Maschinensteuerungskomponente "Ausstosser 1" zugeordnete Schalteingänge
- 64: Übersicht über der Maschinensteuerungskomponente "Ausstosser 2" zugeordnete Schalteingänge
- 66: Übersicht über der Maschinensteuerungskomponente "Kernzug 1" zugeordnete Schalteingänge
- 70: Bildschirmausschnitt mit Übersicht über eingerichtete Maschinensteuerungskomponenten
- 71: Reiter "Hilfssteuerungen"
- 72: Darstellung für die Hilfssteuerungskomponente "Handling"
- 74: Darstellung für die Hilfssteuerungskomponente "Ausstosser 1"
- 76: Darstellung für die Hilfssteuerungskomponente "Ausstosser 2"
- 78: Darstellung für die Hilfssteuerungskomponente "Luftventil"
- 80: Darstellung für die Hilfssteuerungskomponente "Kernzug"
- 81: Darstellung für die neu hinzugefügte Hilfssteuerungskomponente "Kernzug"
- 82: Betätigungsknopf für die Hinzufügung einer Hilfssteuerungskomponente
- 84: Betätigungsknopf für das Löschen einer Hilfssteuerungskomponente
- 86: Spezifizierung einer ausgewählten Hilfssteuerungskomponente
- 88: Darstellung des Komponententyps und der Technologie
- 90: Darstellung der Sicherheitsstufe
- 92: Darstellung der Anschlusszuweisung
- 94: Auswahlmenü (Pull-down Menü) zur Auswahl des Ventilanschlusses
- 96: Auswahlmenü (Pull-down Menü) zur Auswahl des Endschalters E1
- 97: Darstellung für die neu hinzugefügte Hilfssteuerungskomponente "Ausstosser 3"

## Patentansprüche

1. Verfahren zur Steuerung und Bedienung einer Produktionszelle unter Einschluss wenigstens eines Teils der ihr zugeordneten Peripheriegeräte, wobei Maschinenabläufe auf der Basis von Maschinensteuerungskomponenten, welche Teil eines Domänenmodells sind, mit Hilfe einer Domänensprache erstellt, verwaltet und ausgeführt werden,
**dadurch gekennzeichnet, dass**
eine Maschinensteuerungskomponente (16) als Teil des Domänenmodells neu erstellt oder verändert wird, mit den Schritten
- Auswählen einer Maschinensteuerungskomponente (16) aus einer Menge von vorgegebenen Komponententypen,
- Zuweisen einer zulässigen Technologie aus einer Menge von Technologien für den jeweiligen Komponententypen, wobei für jede Technologie eines Komponententypen eine Logik hinterlegt ist, welche die für die jeweilige Technologie erforderlichen Anschluss-Schnittstellen umfasst und für die Maschinensteuerungskomponente (16) definiert,
- Zuweisen der Anschluss-Schnittstellen der generierten Maschinensteuerungskomponente (16) zu geeigneten Hardware-Ein- und - Ausgängen von vorhandenen Anschlüssen der Produktionszelle.

2. Verfahren nach Anspruch 1,
**dadurch gekennzeichnet,**
**dass** bei der Zuweisung der Technologie zu der Maschinensteuerungskomponente (16) geprüft wird, ob diese Zuweisung zulässig ist.

3. Verfahren nach Anspruch 1 oder 2,
**dadurch gekennzeichnet,**
**dass** alle vorhandenen oder erzeugten Maschinensteuerungskomponenten (16) in einem Komponenten-Pool (22) abgelegt werden.

4. Verfahren nach einem der vorhergehenden Ansprüche,
**dadurch gekennzeichnet,**
**dass** die generierte Maschinensteuerungskomponente (16) nach Ablage im Komponenten-Pool (22) in der Konfiguration des Maschinenablaufs mithilfe einer Domänensprache zur Beschreibung des Maschinenablaufs verwendbar ist.

5. Verfahren nach einem der vorhergehenden Ansprüche,
**dadurch gekennzeichnet,**
**dass** alle Hardware-Ein- und -Ausgängen von vorhandenen Anschlüssen der Produktionszelle in einem Hardware-Pool (20) verwaltet werden.

6. Verfahren nach einem der vorhergehenden Ansprüche,
**dadurch gekennzeichnet,**
**dass** beim Zuweisen der Anschluss-Schnittstelle einer Maschinensteuerungskomponente (16) zu einem Hardware- Ein- oder -Ausgang die Korrektheit der Zuweisung geprüft wird.

7. Verfahren nach einem der vorhergehenden Ansprüche,
**dadurch gekennzeichnet,**
**dass** nach der Erstellung oder Veränderung einer Maschinensteuerungskomponente (16) bei der Umsetzung in die Maschinensteuerung die Vollständigkeit und Zulässigkeit der Zuweisungen geprüft wird.

8. Verfahren nach einem der vorhergehenden Ansprüche,
**dadurch gekennzeichnet,**
**dass** die Maschinenkonfiguration exportierbar und wieder importierbar ist.

9. Verfahren nach einem der vorhergehenden Ansprüche,
**dadurch gekennzeichnet,**
**dass** die Hardware-Ein- und -Ausgänge von vorhandenen Anschlüssen der Produktionszelle beim Zuweisen zu Anschluss-Schnittstellen einer Maschinensteuerungskomponente (16) aus einem Anschluss-Pool freier Anschlüsse ausgewählt werden.

10. Einrichtung für die Steuerung und das Bedienen einer Produktionszelle mit Rechner-/Speichermitteln bei dem der Produktionsablauf an der Bedieneinrichtung (46) durch den Benutzer vorgebbar und parametrierbar ist, wobei die Rechner-/Speichermittel ausgebildet sind zur Aufnahme einer Wissensbasis und an der Bedieneinrichtung (46)
- ein Abbild von wenigstens einem Teil der an der jeweiligen Produktionszelle vorhandenen oder ihr zugeordneten Peripheriegeräte in einem Domänenmodell in Form von Maschinensteuerungskomponenten (16) erzeugbar und Maschinenabläufe mit Hilfe einer Domänensprache erstellbar, verwaltbar und ausführbar sind,
**dadurch gekennzeichnet, dass** eine Maschinensteuerungskomponente (16) als Teil des Domänenmodells neu erstellbar oder veränderbar ist,
- in einer Speichereinrichtung eine Menge von vorgegebenen Komponententypen zur Auswahl einer neuen Maschinensteuerungskomponente (16) hinterlegt ist,
- in einer Speichereinrichtung für jede angebotenen Komponententypen eine Menge von Technologien hinterlegt ist, die einer Maschinensteuerungskomponente (16) eines Komponententypen zuweisbar ist, um für jede Technologie eines Komponententypen eine Logik und erforderlichen Schnittstellen zuzuweisen,
- und Mittel zum Zuweisen von Hardware-Ein- und -Ausgängen vorhandener Anschlüsse der Produktionszelle an Anschluss-Schnittstellen von erstellten Maschinensteuerungskomponenten (16).

11. Einrichtung nach Anspruch 10,
**dadurch gekennzeichnet,**
**dass** die Rechner-/Speichermittel ausgebildet sind, um zu prüfen, ob die Zuweisung der Technologie zu einer Maschinensteuerungskomponente (16) zulässig ist.

12. Einrichtung nach Anspruch 10 oder 11,
**dadurch gekennzeichnet,**
**dass** eine Speichereinrichtung vorgesehen ist, in der vorhandene und/oder erzeugte Maschinensteuerungskomponenten (16) in Form eines Komponenten-Pools (22) in einer Speichereinrichtung ablegbar sind.

13. Einrichtung nach einem der Ansprüche 10 bis 12,
**dadurch gekennzeichnet,**
**dass** die Rechner-/Speichermittel ausgebildet sind, um erzeugte Maschinensteuerungskomponenten (16) nach Ablage im Komponenten-Pool (22) in der Maschinensteuerung zu integrieren.

14. Einrichtung nach einem der Ansprüche 10 bis 13,
**dadurch gekennzeichnet,**
**dass** Mittel vorgesehen sind, um die Zuweisung einer Anschluss-Schnittstellen einer Maschinensteuerungskomponente (16) mit dem Hardware-Ein- oder Ausgang vorhandener Anschlüsse der Produktionszelle auf deren Korrektheit zu überprüfen.

15. Einrichtung nach einem der Ansprüche 10 bis 14,
**dadurch gekennzeichnet,**
**dass** Mittel (34, 36) vorgesehen sind, um nach der Erstellung oder Veränderung einer Maschinensteuerungskomponente (16) sowie deren Verwendung in dem Domänenmodell die Abweichung zum bisherigen Produktionsablauf festzustellen und die Maschinensteuerung derart zu verändern, dass die Veränderungen im Produktionsablauf umsetzbar sind.

16. Einrichtung nach einem der Ansprüche 10 bis 15,
**dadurch gekennzeichnet,**
**dass** Mittel vorgesehen sind, um die Maschinenkonfiguration zu im- und/oder exportieren.

17. Einrichtung nach einem der Ansprüche 10 bis 16,
**dadurch gekennzeichnet,**
**dass** Mittel vorgesehen sind, um zu prüfen, ob die Anschluss-Schnittstellen einer Maschinensteuerungskomponente (16) mit geeigneten Harware-Ein- und Ausgängen von vorhandenen Anschlüssen der Produktionszelle verbunden sind.

## Claims

1. A method for controlling and operating a production cell including at least a portion of the peripheral equipment associated with it, wherein machine sequences based on machine control components that are part of a domain model are established, administered and executed by means of a domain language, **characterized in that**
a machine control component (16) as part of the domain model is newly established or altered, with the steps:
- selecting a machine control component (16) from a number of predetermined component types,
- assigning a permissible technology from a number of technologies for the respective component type, wherein for each technology of a component type a logic is stored, which comprises the connection interfaces required for the respective technology and defines them for the machine control component (16),
- allocating the connection interfaces of the generated machine control component (16) to suitable hardware inputs and outputs of existing connections of the production cell.

2. The method according to Claim 1,
**characterized in that**
in the allocating of the technology to the machine control component (16) a check is carried out as to whether this allocation is permissible.

3. The method according to Claim 1 or 2,
**characterized in that**
all existing or generated machine control components (16) are stored in a component pool (22).

4. The method according to one of the preceding claims,
**characterized in that**
the generated machine control component (16), after storing in the component pool (22), is able to be used in the configuration of the machine sequence by means of a domain language for describing the machine sequence.

5. The method according to one of the preceding claims,
**characterized in that**
all hardware inputs and outputs of existing connections of the production cell are administered in a hardware pool (20).

6. The method according to one of the preceding claims,
**characterized in that**
in the allocating of the connection interface of a machine control component (16) to a hardware input or output, the correctness of the allocation is checked.

7. The method according to one of the preceding claims,
**characterized in that**
after the establishing or altering of a machine control component (16) during the transferring into the machine control, the completeness and reliability of the allocations is checked.

8. The method according to one of the preceding claims,
**characterized in that**
the machine configuration is able to be exported and imported again.

9. The method according to one of the preceding claims,
**characterized in that**
the hardware inputs and outputs of existing connections of the production cell are selected from a connection pool of free connections during allocating to connection interfaces of a machine control component (16).

10. A device for controlling and operating a production cell with computer/storage means in which the production sequence is able to be predefined and parameterized by the user at the operating device (46), wherein the computer/storage means are configured to receive a knowledge base and at the operating device (46)
- an image of at least a portion of the peripheral equipment existing at the respective production cell or allocated thereto are able to be generated in a domain model in the form of machine control components (16) and
machine sequences are able to be established, administered and executed by means of a domain language,
**characterized in that**
a machine control component (16) is able to be newly established or altered as portion of the domain model,
- a number of predefined component types is stored in a storage device for the selection of a new machine control component (16),
- a number of technologies is stored in a storage device for each offered component type, which is able to be allocated to a machine control component (16) of a component type, in order to allocate a logic and necessary interfaces for each technology of a component type,
- and means for allocating hardware inputs and outputs of existing connections of the production cell to connection interfaces of established machine control components (16).

11. The device according to Claim 10,
**characterized in that**
the computer/storage means are configured in order to check whether the allocation of the technology to a machine control component (16) is permissible.

12. The device according to Claim 10 or 11,
**characterized in that**
a storage device is provided, in which existing and/or generated machine control components (16) in the form of a component pool (22) are able to be deposited in a storage device.

13. The device according to one of Claims 10 to 12,
**characterized in that**
the computer/storage means are configured in order to integrate generated machine components (16) in the machine control after storing in the component pool (22).

14. The device according to one of Claims 10 to 13,
**characterized in that**
means are provided in order to check the allocation of a connection interface of a machine control component (16) with the hardware input or output of existing connections of the production cell with regard to the correctness thereof.

15. The device according to one of Claims 10 to 14,
**characterized in that**
means (34, 36) are provided, in order to determine, after the establishing or altering of a machine control component (16) and its use in the domain model, the deviation from the production sequence hitherto, and to alter the machine control such that the changes are able to be implemented in the production sequence.

16. The device according to one of Claims 10 to 15,
**characterized in that**
means are provided in order to import and/or export the machine configuration.

17. The device according to one of Claims 10 to 16,
**characterized in that**
means are provided, in order to check whether the connection interfaces of a machine control component (16) are connected with suitable hardware inputs and outputs of existing connections of the production cell.

## Revendications

1. Procédé de commande et d'utilisation d'une cellule de production intégrant au moins une partie des appareils périphériques qui lui sont attribués, dans lequel les séquences machine sont créées, gérées et exécutées à l'aide d'une langue de domaine, en se basant sur des composantes de commande machine qui font partie d'un modèle de domaine,
**caractérisé en ce**
**qu'**une composante de commande machine (16) est nouvellement créée ou modifiée en tant que partie du modèle de domaine, avec les étapes suivantes
- sélection d'une composante de commande machine (16) à partir d'une quantité de types de composantes prédéfinis,
- attribution d'une technologie autorisée à partir d'une quantité de technologies pour le type de composante respectif, sachant qu'une logique est consignée pour chaque technologie d'un type de composante, qui comprend les interfaces de connexion nécessaires pour la technologie respective et les définit pour la composante de commande machine (16),
- attribution des interfaces de connexion de la composante de commande machine (16) générée à des entrées et sorties matérielles appropriées de connexions disponibles de la cellule de production.

2. Procédé selon la revendication 1,
**caractérisé en ce que**
lors de l'attribution de la technologie à la composante de commande machine (16), il est vérifié si cette attribution est autorisée.

3. Procédé selon la revendication 1 ou 2,
**caractérisé en ce que**
toutes les composantes de commande machine (16) disponibles ou créées sont déposées dans un groupe de composantes (22).

4. Procédé selon l'une des revendications précédentes,
**caractérisé en ce que**
la composante de commande machine (16) générée peut être employée après dépôt dans le groupe de composantes (22) dans la configuration de la séquence machine à l'aide d'une langue de domaine pour décrire la séquence machine.

5. Procédé selon l'une des revendications précédentes,
**caractérisé en ce que**
toutes les entrées et sorties matérielles de connexions disponibles de la cellule de production sont gérées dans un groupe de matériel (20).

6. Procédé selon l'une des revendications précédentes,
**caractérisé en ce que**
lors de l'attribution de l'interface de connexion d'une composante de commande machine (16) à une entrée ou sortie matérielle, l'exactitude de l'attribution est vérifiée.

7. Procédé selon l'une des revendications précédentes,
**caractérisé en ce**
**qu'**après la création ou la modification d'une composante de commande machine (16), l'intégralité et l'admissibilité des attributions sont vérifiées lors de la mise en oeuvre dans la commande machine.

8. Procédé selon l'une des revendications précédentes,
**caractérisé en ce que**
la configuration machine peut être exportée et à nouveau importée.

9. Procédé selon l'une des revendications précédentes,
**caractérisé en ce que**
toutes les entrées et sorties matérielles de connexions disponibles de la cellule de production sont sélectionnées à partir d'un groupe de connexions de connexions libres lors de l'attribution à des interfaces de connexion d'une composante de commande machine (16).

10. Dispositif pour la commande et l'utilisation d'une cellule de production comprenant des moyens de calcul/de mémoire, dans lequel la séquence de production peut être prédéfinie et paramétrée sur le dispositif de commande (46) par l'utilisateur, dans lequel les moyens de calcul/de mémoire sont formés pour recevoir une connaissance de base et sur le dispositif de commande (46)
- une image d'au moins une partie des appareils périphériques présents sur la cellule de production respective ou attribués à celle-ci peut être produite dans un modèle de domaine sous forme de composantes de commande machine (16) et
des séquences machine peuvent être créées, gérées et exécutées à l'aide d'une langue de domaine, **caractérisé en ce**
**qu'**une composante de commande machine (16) en tant que partie du modèle de domaine peut être nouvellement créée ou modifiée,
- dans un dispositif de mémoire, une quantité de types de composantes prédéfinies est consignée pour sélectionner une nouvelle composante de commande machine (16),
- dans un dispositif de mémoire, une quantité de types de composante prédéfinis est consignée pour sélectionner une nouvelle composante de commande machine (16),
- dans un dispositif de mémoire, une quantité de technologies est consignée pour chaque type de composante proposé, qui peut être attribuée à une composante de commande machine (16) d'un type de composante pour attribuer une logique et des interfaces nécessaires pour chaque technologie d'un type de composante,
- et des moyens pour attribuer des entrées et sorties matérielles de connexions disponibles de la cellule de production sur des interfaces de connexion de composantes de commande machine (16) créées.

11. Dispositif selon la revendication 10,
**caractérisé en ce que**
les moyens de calcul/de mémoire sont formés pour vérifier si l'attribution de la technologie à une composante de commande machine (16) est autorisée.

12. Dispositif selon la revendication 10 ou 11,
**caractérisé en ce**
**qu'**un dispositif de mémoire est prévu, dans lequel des composantes de commande machine (16) disponibles et/ou produites peuvent être consignées sous forme d'un groupe de composantes (22) dans un dispositif de mémoire.

13. Dispositif selon l'une des revendications 10 à 12,
**caractérisé en ce que**
les dispositifs de calcul/de mémoire sont conçus pour intégrer dans la commande machine des composantes de commande machine (16) créées après consignation dans le groupe de composantes (22).

14. Dispositif selon l'une des revendications 10 à 13,
**caractérisé en ce que**
des moyens sont prévus pour vérifier l'exactitude de l'attribution d'une interface de connexion d'une composante de commande machine (16) avec l'entrée ou la sortie matérielle de connexions disponibles de la cellule de production.

15. Dispositif selon l'une des revendications 10 à 14,
**caractérisé en ce que**
des moyens (34, 36) sont prévus pour constater l'écart par rapport à l'ancienne séquence de production, après la création ou la modification d'une composante de commande machine (16) ainsi que son utilisation dans le modèle de domaine, et pour modifier la machine de telle sorte que les modifications puissent être mises en oeuvre dans la séquence de production.

16. Dispositif selon l'une des revendications 10 à 15,
**caractérisé en ce que**
des moyens sont prévus pour importer et/ou exporter la configuration machine.

17. Dispositif selon l'une des revendications 10 à 16,
**caractérisé en ce que**
des moyens sont prévus pour vérifier si les interfaces de connexion d'une composante de commande machine (16) sont reliées à des entrées et sorties matérielles appropriées de connexions disponibles de la cellule de production.
